(19) Europäisches Patentamt
European Patent Office
Office européen des brevets

(11) **EP 3 122 557 B1**

(12) **EUROPEAN PATENT SPECIFICATION**

(45) Date of publication and mention
of the grant of the patent:
**25.12.2019 Bulletin 2019/52**

(21) Application number: **15714365.2**

(22) Date of filing: **20.03.2015**

(51) Int Cl.:
*B32B 27/32* (2006.01)      *C08F 2/28* (2006.01)
*C08J 5/18* (2006.01)       *C08J 7/04* (2006.01)
*C09D 127/18* (2006.01)      *C08L 27/18* (2006.01)
*B32B 27/08* (2006.01)      *B32B 27/28* (2006.01)

(86) International application number:
**PCT/US2015/021634**

(87) International publication number:
**WO 2015/148285 (01.10.2015 Gazette 2015/39)**

(54) **COMPOSITE MOLDED BODY WITH A LAYER OF A COPOLYMER OF TETRAFLUOROETHYLENE AND PERFLUORO (ETHYL VINYL ETHER)**

KOMPOSIT-FORMKÖRPER MIT EINER SCHICHT AUS EINEM COPOLYMER AUS TETRAFLUORETHYLEN UND PERFLUOR(ETHYLVINYLETHER)

PIÈCE FORMÉ COMPOSITE AVEC UNE COUCHE EN UN COPOLYMÈRE DE TÉTRAFLUORÉTHYLÈNE ET PERFLUOR(ÉTHYLVINYLÉTHER)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2014 JP 2014062406**

(43) Date of publication of application:
**01.02.2017 Bulletin 2017/05**

(73) Proprietor: **Du Pont-Mitsui Fluorochemicals Co. Ltd.**
**Tokyo 101-0064 (JP)**

(72) Inventor: **MUGISAWA, Masaki**
**Shizuoka-Shi**
**Shizuoka 424-8631 (JP)**

(74) Representative: **Morf, Jan Stefan et al**
**Abitz & Partner**
**Patentanwälte mbB**
**Arabellastrasse 17**
**81925 München (DE)**

(56) References cited:
WO-A2-2008/076280      US-A- 3 980 649
US-A- 5 919 878        US-A1- 2010 034 504
US-A1- 2010 160 510

**Description**

**FIELD OF THE DISCLOSURE**

The present disclosure is directed to a composite molded body of a copolymer of tetrafluoroethylene and perfluoro(ethyl vinyl ether). Further, the present disclosure relates to a composite molded body of this copolymer and a thermoplastic resin and/or thermosetting resin.

**BACKGROUND OF THE DISCLOSURE**

Fluorinated resins have excellent chemical, electrical, mechanical, and surface properties, and are widely used as surface coatings for various articles, including frying pans, bread molds, rice cookers and the like. Of the various fluorinated resins, the perfluoro resin that is a copolymer of tetrafluoroethylene and perfluoro (alkyl vinyl ether), commonly referred to as PFA, has these desirable properties and at the same time, is thermally fusible and can be melt-molded. As a result, it is widely used for chemical manufacturing equipment that is in frequent contact with harsh chemicals, as well as a material of construction for articles in the semiconductor field utilizing its chemical resistance. PFA further finds utility as electrical insulation and in the electronics field utilizing its electrical characteristics of extremely low dielectric constant and dielectric loss tangent.

Desirable characteristics of PFA include its heat resistance and its high melting point. Since its melting point is high, it can be used without issue if the substrate to which the PFA is applied as coating is an article that also has heat resistance. However, if the substrate to which the PFA is adjoined does not have heat resistance or if its melting point is low relative to the melting point of the PFA, the use of PFA will be limited.

For example, Japanese Laid Open Patent Application No. H07-161260 discloses a resistor support member in which the outer surface of a glass fiber reinforced plastic, which uses resin that is said to have heat resistance, such as polyphenylene sulfide and polyether ether ketone, is coated by fluorine resin. PFA is used as the fluorine resin, but this document describes that in order to form a coating of the PFA, a method was used in which a shrinkable film or tube of PFA is prepared in advance, and the shrinkable film or tube is used to cover the glass fiber reinforced plastic, then heat treated for a short period of time at 250°C to shrink the film or tube in order to apply the coating. This is because the resin component of the glass fiber reinforced plastic will complete the coating of PFA without decomposing or melting at a high temperature of 250°C.

Thus, the fluorinated resin known as PFA is not used to coat substrates having a relatively lower low melting point, and such a concept is not found in the prior art. As for copolymers of tetrafluoroethylene and perfluoro(ethyl vinyl ether) (PEVE), a TFE/PEVE binary copolymer comprising 32.9 wt% of PEVE is disclosed as an amorphous fluoropolymer in Example 3 of JP patent no. 3,980,649. However, in this example, a solution of a 10 wt% concentration of amorphous fluoropolymer is disclosed, and the obtained solution is only described as being extremely viscous at room temperature, and nothing is disclosed regarding coating a substrate having a relatively low melting point.

**SUMMARY OF THE DISCLOSURE**

The present inventors arrived at the present invention as a result of dedicated research into developing a technology that can provide a composite molded body comprising a copolymer of tetrafluoroethylene and perfluoro(ethyl vinyl ether), especially a composite molded body of this copolymer and a thermoplastic resin and/or thermosetting resin.

The present invention provides a composite molded body comprising a copolymer of tetrafluoroethylene and perfluoro(ethyl vinyl ether) and a thermoplastic resin and/or thermosetting resin, wherein the content of PEVE in the copolymer of tetrafluoroethylene and perfluoro(ethyl vinyl ether) is 20-80 wt% based on the total weight of the copolymer, and the melt flow rate (MFR) measured in compliance with ASTM D1238, using a 5 kg weight and measured at 250°C ± 0.1, is 0.1-100 g/10 min.

The aforementioned composite molded body, wherein the MFR of the copolymer of the tetrafluoroethylene and perfluoro(ethyl vinyl ether), measured in compliance with ASTM D1238, using a 5 kg weight, and measured at a temperature of 250°C ± 0.1, is 0.1-100 g/10 min, is a preferred embodiment of the present invention.

The embodiment in which the composite body is a multilayered molded body is a preferred embodiment of the composite molded body of the present invention.

A multilayered molded body obtained by coating an aqueous dispersion of the copolymer of tetrafluoroethylene and perfluoro(ethyl vinyl ether), or coating a solution of the copolymer of tetrafluoroethylene and perfluoro(ethyl vinyl ether) in an organic solvent, onto the surface of a molded body of a thermoplastic resin and/or thermosetting resin, and heating it to a temperature greater than or equal to the melting temperature of the copolymer, is a preferred embodiment of the composite molded body of the present invention.

The multilayered molded body obtained by coextruding the aqueous dispersion of the copolymer of tetrafluoroethylene and perfluoro(ethyl vinyl ether) and a thermoplastic resin and/or thermosetting resin is also a preferred embodiment of the composite molded body of the present invention.

The present invention also provides a manufacturing method for a multilayered molded body obtained by coating an aqueous dispersion of the copolymer of tetrafluoroethylene and perfluoro(ethyl vinyl ether), or coating a solution of the copolymer of tetrafluoroethylene and perfluoro(ethyl vinyl ether) in an organic solvent, onto the surface of a molded body of a thermoplastic resin and/or thermosetting resin, and heating it to greater than or equal to the melting temperature of the copolymer, wherein the amount of PEVE in the copolymer is 20-80 wt% based on the total weight of the copolymer, and the MFR measured in compliance with ASTM D1238, using a 5 kg weight, and measured at a temperature of 250°C $\pm$ 0.1, is 0.1-100 g/10 min.

The manufacturing method for a multilayered molded body wherein the copolymer of tetrafluoroethylene and perfluoro(ethyl vinyl ether) and a thermoplastic resin and/or thermosetting resin are coextruded is a preferred embodiment of the present invention.

The present invention provides a multilayered molded body comprising a copolymer of a tetrafluoroethylene and perfluoro (ethyl vinyl ether), and a thermoplastic resin and/or thermosetting resin. The present invention provides a multilayered molded body comprising a copolymer of a tetrafluoroethylene and perfluoro (ethyl vinyl ether), and a thermoplastic resin and/or thermosetting resin, without causing fusion, thermal deformation, or decomposition of the thermoplastic resin and/or thermosetting resin.

With the present invention, a multilayered molded body with a complex shape can be obtained, wherein the multilayer molded body comprises a layer of copolymer of tetrafluoroethylene and perfluoro(ethyl vinyl ether), and a layer of thermoplastic resin and/or thermosetting resin. In one embodiment, the multilayered molded body has a layer of copolymer of tetrafluoroethylene and perfluoro(ethyl vinyl ether) which includes pigment, which expresses a characteristic color without being decomposed or altered.

The present invention provides a multilayered molded body that is provided with a layer having desirable chemical properties, electrical properties, mechanical properties, and surface properties in a molded body.

The present invention provides a manufacturing method with which a multilayered molded body comprising a copolymer of a tetrafluoroethylene and perfluoro(ethyl vinyl ether), and a thermoplastic resin and/or thermosetting resin can be obtained without causing fusion, thermal deformation, or decomposition of the thermoplastic resin and/or thermosetting resin.

**DETAILED DESCRIPTION**

The present invention provides a composite molded body comprising a layer of a copolymer of a tetrafluoroethylene and perfluoro(ethyl vinyl ether), wherein the amount of perfluoro(ethyl vinyl ether) (PEVE) is 20-80 wt% based on the total weight of the copolymer, and the melt flow rate (MFR) measured in compliance with ASTM D1238, using a 5 kg weight and measured at a temperature of 250°C $\pm$ 0.1, is 0.1-100 g/10 min.

The present invention further provides a composite molded body comprising a copolymer of a tetrafluoroethylene and perfluoro(ethyl vinyl ether), and a thermoplastic resin and/or thermosetting resin, wherein the amount of perfluoro(ethyl vinyl ether) (PEVE) in the copolymer of a tetrafluoroethylene and perfluoro(ethyl vinyl ether) is 20-80 wt% based on the total weight of the copolymer, and the melt flow rate (MFR) of the copolymer of a tetrafluoroethylene and perfluoro(ethyl vinyl ether), measured in compliance with ASTM D1238, using a 5 kg weight and measured at a temperature of 250°C $\pm$ 0.1, is 0.1-100 g/10 min.

In the present invention, a composite molded body comprising a copolymer of tetrafluoroethylene and perfluoro(ethyl vinyl ether) and a thermoplastic resin and/or thermosetting resin, is used to mean that it includes a multilayered molded body in which the copolymer of tetrafluoroethylene and perfluoro(ethyl vinyl ether) and a thermoplastic resin and/or thermosetting resin each form separate layers, and to also mean a molded body obtained by kneading and molding a mixture of the copolymer of tetrafluoroethylene and perfluoro(ethyl vinyl ether) and a thermoplastic resin and/or thermosetting resin, under conditions in which both components will melt together. In this case, the copolymer of a tetrafluoroethylene and perfluoro(ethyl vinyl ether), and the thermoplastic resin and/or thermosetting resin as components do not each exclude an embodiment comprising other components within a range that does not impair the objects of the present invention. In the same way, other components can be added to the mixture if necessary.

The copolymer of tetrafluoroethylene and perfluoro(ethyl vinyl ether) of the present invention is a copolymer comprising polymerized units of tetrafluoroethylene (TFE) and polymerized units of perfluoro(ethyl vinyl ether) (PEVE) (herein alternately referred to as TFE/PEVE copolymer), and the content amount of PEVE is 20-80 wt%, preferably 20-60 wt%, and more preferably 25-50 wt%, based on the total weight of the copolymer.

The TFE/PEVE copolymer of the present invention is preferably a copolymer that does not have a melting peak in the differential scanning calorimetry (DSC) of the polymer, or, if there is a peak, it is a peak that is not sharp so that it is difficult to identify the melting point.

Further, the TFE/PEVE copolymer of the present invention is an amorphous fluoropolymer with a heat of fusion calculated from any endotherm detected in the differential scanning calorimetry (DSC) of the polymer is less than 3 J/g, and preferably less than 1 J/g. It is generally preferable for this kind of amorphous fluoropolymer to not show any heat absorption upon the second DSC heating, even if a weak heat absorption is detected in the first heating.

The TFE/PEVE copolymer of the present invention has a melt flow rate (MFR) measured in compliance with ASTM D1238, using a weight of 5 kg and measured at a temperature of 250°C $\pm$ 0.1, of 0.1-100 g/10 min, preferably 1-50 g/10 min, and more preferably 10-40 g/10 min.

The TFE/PEVE copolymer of the present invention means a fluoropolymer comprising TFE and PEVE as the main polymerized units, and is preferably a TFE/PEVE binary copolymer, but it may further comprise an additional, functional or non-functional, fluorinated comonomer. Examples of other, additional non-functional, fluorinated comonomers that can be included, include fluoro olefin (other than TFE) having 2-8 carbon atoms and fluorinated alkyl vinyl ethers whose alkyl group comprises 1 or 3-5 carbon atoms. Preferable examples of these other, additional, non-functional, fluorinated comonomers include, in terms of fluoro olefins, hexafluoropropylene (HFP) and chlorotrifluoroethylene (CTFE).

Examples of other additional, functional, fluorinated comonomers include functional, fluorinated monomers selected from a group consisting of, for example, perfluoro(methyl vinyl ether), $CF_2=CFOCF_2CF_2SO_2F$; $CF_2=CF[OCF_2CF(CF_3)]O(CF_2)_2Y$ (in the formula, Y is $-SO_2$ or -CN); and $CF_2=CF[OCF_2CF(CF_3)]O(CF_2)_2CH_2Z$ (in the formula, Z is -OH, -OCN, $-O(CONH_2$ or $-OP(O)(OH)_2)$.

The other, additional fluorinated comonomers can be used individually or as a combination of two or more types. The content amount of the other additional fluorinated comonomers is preferably an amount in which, along with the content amount of PEVE, the fluoropolymer is an amorphous fluoropolymer.

The TFE/PEVE copolymer of the present invention can be obtained by solution polymerization, emulsion polymerization, or suspension polymerization.

After polymerization is completed, the obtained aqueous dispersion is adjusted for the solid content amount, emulsion stabilizer adjustment, etc., if necessary, and used as the TFE/PEVE copolymer.

Further, regarding the obtained aqueous dispersion liquid, the solid of TFE/PEVE copolymer can be recovered from the aqueous polymerization medium, using a well-known conventional technology (for example, as disclosed in US Patent No. 5,266,639). For example, a solid of TFE/PEVE copolymer can be obtained by, after an electrolytic substance is added to the aqueous dispersion liquid and aggregating colloidal particulates of fluorine resin under mechanical agitation, it is separated from the aqueous medium, and water washed and dried if necessary. In order to mold a TFE/PEVE copolymer and obtain the composite molded body of the present invention, in one embodiment the solid TFE/PEVE copolymer is in the form of a pellet shape prior to molding.

When the TFE/PEVE copolymer of the present invention can be dissolved in a solvent, it can also be used as a solution. When the PEVE content amount in the TFE/PEVE copolymer becomes greater than or equal to 50 wt%, for example, around 50-80 wt%, it can be dissolved in a solvent.

The solvent in which the TFE/PEVE copolymer of the present invention is dissolved is not particularly limited, but it is preferably a fluorinated solvent.

For the fluorinated solvent, it is preferable that it is at least one type selected from a perfluorinated solvent or a partially fluorinated solvent, and it is preferable that of all the atoms that bind with carbon, at least 50% are fluorine atoms.

A perfluorinated solvent is a so-called perfluorinated compound in which all the monovalent atoms that bind with carbon are fluorine atoms. The perfluorinated solvent is preferably at least one type selected from perfluoro carbon, halogen substituted ether, or nitrogen-containing perfluoro compound. Specific examples of this kind of perfluorinated solvent include fluorinated cycloalkanes such as perfluorocyclobutane, perfluorodecaline, perfluoro(1-methyldecaline), perfluoro(dimethyl decalin), perfluoro(tetradecahydrophenanthrene), perfluoro(methyl cyclohexane), and perfluoro (cyclohexyl methyl) decalin, and the like; fluorinated aromatic compounds such as perfluorobenzene, perfluoronaphthalene, and perfluorobiphenyl, and the like; halogen substituted ethers such as perfluoro(2-n-butyl tetrahydrofuran); sulfurcontaining perfluoro compounds such as perfluoro-1,4-dithiane, perfluorothiepane, perfluorodiethyl sulfone, and fluoride perfluorooctanesulfonyl; fluorinated alkyl amines such as perfluoro(dimethylbutylamine); fluorinated trialkylamines such as perfluoro(triamylamine), perfluoro(tri heptyl amine) and perfluoro(tripentylamine).

To make the TFE/PEVE copolymer of the present invention a solvent composition that fulfills the target turbidity at atmospheric pressure with respect to these perfluorinated solvents, the boiling point of the perfluorinated solvent is preferably greater than or equal to 50°C, and more preferably greater than or equal to 100°C. Meanwhile regarding the fluorinated cycloalkane and fluorinated aromatic compounds described above, in order that the TFE/PEVE copolymer would be a solvent composition that fulfills the target turbidity in atmospheric pressure, its boiling point is preferably greater than or equal to 70°C, and more preferably greater than or equal to 140°C.

The partially fluorinated solvent is preferably at least one type selected from hydrofluoro carbon or partially halogen substituted ether. It is preferable for the partially fluorinated solvent to be at least one type selected from a partially fluorinated solvent having up to around 12.5 atomic % of hydrogen and/or 37.5 atomic % of chlorine, based on the total atoms that are bound to carbon atoms. Specific examples of partially fluorinated solvents include HFC alkanes of decafluoropentane represented by $C_5H_2F_{10}$ (representative example 1,1,1,2,3,4,4,5,5,5-decafluoropentane) represented by the following formula $C_nF_{2n+2-x}H_x$ (n = 6-15, x = 1-3); HFC alkanes represented by the following formula $C_nF2_{n-x}H_x$ (n = 7-15, x = 1-3); perfluoro (alkyl) alkyl ethers such as perfluoro (butyl) methyl ether, perfluoro (hexyl) methyl ether, and perfluoro (butyl) ethyl ether.

For the fluorinated solvent of the present invention, it is possible to use solvents disclosed in US Patent No. 5,328,946 and US Patent No. 5,397,829.

When using TFE/PEVE copolymer as a solvent, its concentration should be 0.1-50 wt%, preferably 0.1-20 wt%, and more preferably around 0.5-20 wt%.

Examples of other thermoplastic resins except the TFE/PEVE copolymer of the present invention include at least one type selected from a group consisting of at least one type of engineering plastics selected from nylon; polycarbonate; polyacetal; ultrahigh molecular weight polyethylene; and polyesters such as poly terephthalate, polybutylene terephthalate, polyethylene naphthalate, and polybutylene naphthalate, and the like; at least one type of polyolefin selected from low density, medium density, or high density polyethylene and polypropylene; at least one type ethylene-unsaturated carboxylic acid ester copolymers selected from polystyrene, polymethyl methacrylate, ethylene vinyl acetate, and ethylene (meth) acrylic acid ester; at least one type selected from a group consisting of polyurethane; styrene thermoplastic elastomer; polyvinyl chloride; and polyvinylidene chloride, and the like; and examples of thermosetting resin include general-purpose plastics such as phenol resins, urea resins, melamine resins, unsaturated polyester resins, epoxy resins, and silicon resin, and the like.

Further, fluorinated resins that are heat melt-moldable except the TFE/PEVE copolymer of the present invention can be included in the other thermoplastic resins.

If the other thermoplastic resin and/or thermosetting resin of the present invention have melting points, those that are less than or equal to 250°C are preferable.

In the case that the composite molded body of the present invention is a multilayered molded body, the substrate that forms the TFE/PEVE copolymer layer can be an inorganic substrate such as metal, glass, ceramic, and the like.

The shape of the composite molded body of the present invention is not particularly limited, and it can be a simple molded body such as sheet (or film) shaped, or it can be a molded body with a three-dimensionally complex shape.

The manufacturing method for the composite molded body of the present invention will be explained using the manufacturing method for a multilayered molded body as an example.

When using the TFE/PEVE copolymer as the above-described aqueous dispersion, the other thermoplastic resin and/or thermosetting resin are molded into a sheet (or film) shaped, etc., molded body beforehand using a desired molding method, and the aqueous dispersion of the TFE/PEVE copolymer is applied to at least one surface of the molded body, and by heating and drying it at a temperature at which the TFE/PEVE copolymer will melt and a temperature at which the thermoplastic resin and/or thermosetting resin will not deform or decompose, a sheet (or film) shaped multilayered molded body on which a layer of TFE/PEVE copolymer is formed on a sheet (or film) shaped object of another thermoplastic resin and/or thermosetting resin, can be obtained.

When using the TFE/PEVE copolymer as the above-described solution, in the above-described sheet (or film) shaped multilayered molded body, by using the TFE/PEVE copolymer instead of the aqueous dispersion, a sheet (or film) shaped multilayered molded body on which a layer of TFE/PEVE copolymer is formed on a sheet (or film) shaped object of another thermoplastic resin and/or thermosetting resin, can be obtained.

When using the TFE/PEVE copolymer as the above-described pellet shaped solid, by melting the pellet in an extruder and extruding it in a sheet (or film) shape onto a sheet (or film) shaped object of another thermoplastic resin and/or thermosetting resin, a sheet (or film) shaped multilayered molded body on which a layer of TFE/PEVE copolymer is formed on a sheet (or film) shaped object of another thermoplastic resin and/or thermosetting resin can be obtained.

Furthermore, a sheet (or film) shaped multilayered molded body can be obtained, in which a layer of TFE/PEVE copolymer is formed on a sheet (or film) shaped object of another thermoplastic resin and/or thermosetting resin by melting the other thermoplastic resin and/or thermosetting resin each in a co-extruder and co-extruding them.

By using the manufacturing method for the multilayered molded body of the present invention, the TFE/PEVE copolymer and the other thermoplastic resin and/or thermosetting resin will strongly bond without deforming or decomposing the other thermoplastic resin and/or thermosetting resin, and a multilayered molded body can be obtained. Further, it becomes possible to laminate a layer of TFE/PEVE copolymer on a molded body of another thermoplastic resin and/or thermosetting resin with a complex shape.

Even when mixing organic pigments, inorganic contents, and other fillers in the TFE/PEVE copolymer in the manufacturing method for a multilayered molded body of the present invention, since it will not go through a condition that will generate decomposition and alteration of the additive, the effect of the additive can be utilized as-is. For example, when using organic pigments, since the color of the pigment will appear without discoloration, a desired brilliant color can be realized. The pigment is not particularly limited and can be selected from well-known ones and used, and it can be selected from those that are commercially available. Examples of such pigments include Rhodamine B (Tokyo Kasei Kogyo Co., Ltd.) and Sudan III (Tokyo Kasei Kogyo Co., Ltd.).

As a method to obtain a molded body by melt-kneading and forming a mixture of TFE/PEVE copolymer and a thermoplastic resin and/or thermosetting resin, under a condition in which both components will melt, which is another embodiment of the composite molded body of the present invention, the above-described solid or pellet shaped object of the TFE/PEVE copolymer of the present invention can be made a molded body with a desired shape by mixing a powdered body or pellet-shaped body of a thermoplastic resin and/or thermosetting resin in a mixing equipment such as a Henschel mixer and kneader, then using a molding machine such as an extrusion molding machine, injection molding machine, etc.

Other components can be included in the TFE/PEVE copolymer of the present invention if necessary, within a range that will not impair the effects of the present invention. Examples of other components include various antioxidants, ultraviolet stabilizers, crosslinking agents, lubricants, plasticizers, thickeners, fillers, pigments, dyes, flame-retardants, and antistatic agents, and the like.

The multilayered molded body obtained from the present invention can be used for purposes of highly weather resistant coating, chemical coating, water and oil repellent coatings, insulating coatings, exterior coatings, and parting material, and the like. Further, examples of various coating substrates include metal, glass, ceramics, and the like. These substrates can be those that have been appropriately surface treated (for example blasting, plating, silane coupling) in order to increase the adhesive force.

Further, regarding the composite molded body that is a molded body obtained by melt-kneading a mixture of the TFE/PEVE copolymer of the present invention and another thermoplastic resin and/or thermosetting resin, its use as a tube, film, pipe, low charging tube, etc., having weather resistance, chemical resistance, and insulating properties, is expected

## EXAMPLES

The present invention will be described in further detail below with examples or comparative examples, but the present invention is not meant to be limited by these examples. The measurement method for physical properties and raw materials used in the present invention are as follows.

A. Measurement of the physical properties

Melting point (melting peak temperature)

A differential scanning calorimeter (Pyris Type 1 DSC, Perkin Elmer) was used. 10 mg of the sample was weighed and put in an aluminum pan that was prepared for the present device, and after crimping with a crimper prepared for the present device, it was housed in a DSC main body, and its temperature was raised from 100°C to 300°C at 10°C/minute. The melting peak temperature (Tm) was calculated from the melting curve obtained at this time.

(2) Glass transition point

As the measurement instrument, a dynamic viscoelasticity measuring instrument made by Rheometric Scientific F.E. Ltd. (commonly known as ARES) was used. A sheet with a thickness of 0.8-2 mm was molded by compression molding at a temperature of 150-250°C, and a dynamic viscoelasticity measurement sample with a dimension of 45 mm $\times$ 12.5 mm (vertical $\times$ horizontal) was cut from this sheet. In the parallel plate mode of the dynamic viscoelasticity measurement instrument, the temperature was raised from -40 degrees C to 100 degrees C at a measurement frequency of 6.28 rad/sec at 5°C/min, and the storage elastic modulus G' and the loss elastic modulus G" were calculated. The loss tangent tan $\delta$ can be calculated from the following formula using G' and G".

$$\text{loss tangent tan } \delta = \text{loss elastic modulus G"/storage elastic modulus G'}$$

The glass transition point was calculated from the peak temperature of the loss tangent $\delta$.

(3) $^{19}$F-nuclear magnetic resonance spectroscopy (NMR)

As the device, Chemagnetics MX-300 (282 MHz) was used. Measurement was carried out using fluoro-rubber as a chemical shift external standard (-65.88 ppm) in the range of 60-140°C, using the MAS method.

B. Raw material

(1) Fluorine resin (PFA, TFE/PEVE copolymer). For the TFE/PEVE copolymer, TFE/PEVE copolymers A-C prepared in the following ways were used.
(2) Solvent - Methoxy perfluorohexane; 3M Company, Novec (registered trademark) 7300.
(3) Filler I - Rhodamine B (Tokyo Kasei Kogyo Co., Ltd., CAS No. 81-99-9)
(4) Filler II - Sudan III (Tokyo Kasei Kogyo Co., Ltd., CAS No. 85-86-9)

Preparation Example 1 - Preparation of TFE/PEVE copolymer A

2400 mL of deionized water was degassed in a 1 gallon (3.8 L) reactor vessel with a horizontal stirring blade, by purging using exhaust and nitrogen. 5.3 g of ammonium perfluorooctanoate (APFO, $CF_3(CF_2)_6COONH_4$) was added to the reactor vessel at atmospheric pressure. The stirrer was operated at 150 rpm and the temperature was raised to 85°C, and a valve corresponding to the ethane cylinder was opened next, and ethane was supplied to the reactor vessel until the reaction vessel pressure rose to 0.03 MPa. Then, 140 g of PEVE was supplied to the reactor vessel. Then, the reactor vessel was pressurized to 2.06 MPa by TFE. Next, 40 mL of 1.3 g/L aqueous solution of peroxydisulfuric acid ammonium (APS, $(NH_4)_2S_2O_8)$) was added. After the start of a reaction that can be seen by a 0.03 MPa pressure drop, the same initiator solution was supplied at a rate of 0.5 mL/min and PEVE at 1.8 g/min., and TFE was further supplied and the pressure was maintained at 2.06 MPa. All supplying and stirring was stopped at around 120 minutes after starting the reaction. After that, the reactor vessel was vented and the dispersion liquid of the product was collected.

The solid content ratio of the obtained dispersion liquid was 22 wt%. A part of the dispersion liquid was poured into a plastic bottle and placed overnight in a freezer at -20°C. The frozen bottle of dispersion liquid was warmed and the separated polymer phase was collected on a filter. The polymer solid was washed three times using deionized water and then dried for 1.5 hours in an oven at 150°C. The composition of the product resin measured by $^{19}$F-nuclear magnetic resonance spectroscopy (NMR) was, in weight, TFE/PEVE = 76/24. The melting point of the crystal was 229°C according to DSC. The glass transition temperature was 52°C. The melt flow rate (MFR) measured in compliance with ASTM D1238, at a weight of 5 kg and measured temperature of 250°C $\pm$ 0.1 was 10 g/10 min. The obtained TFE/PEVE copolymer is considered TFE/PEVE copolymer A and the dispersion liquid is considered the dispersion liquid of TFE/PEVE copolymer A.

Preparation Example 2 - Preparation of TFE/PEVE copolymer B

A TFE/PEVE copolymer was prepared in the same way as the above-described Preparation Example 1 except for making the PEVE supply amount before starting polymerization 210 g and making the PEVE supply rate after starting the reaction 1.4 g/min. The solid content ratio of the dispersion liquid was 20 wt%. The composition of the product resin measured by $^{19}$F-NMR was, in weight, TFE/PEVE = 63/37. The melting point of the crystal was not detected by DSC. The glass transition temperature was 33°C. The melt flow rate (MFR) measured in compliance with ASTM D1238, at a weight of 5 kg and measured temperature of 250°C $\pm$ 0.1 was 29 g/10 min.

The obtained TFE/PEVE copolymer is considered TFE/PEVE copolymer B and the dispersion liquid is considered the dispersion liquid of TFE/PEVE copolymer B.

Preparation Example 3 - Preparation of TFE/PEVE copolymer C

A TFE/PEVE copolymer was prepared in the same way as the above-described Preparation Example 1 except for making the PEVE supply amount before starting polymerization 245 g and making the PEVE supply rate after starting the reaction 1.7 g/min. The solid content ratio of the dispersion liquid was 13 wt%. The composition of the product resin measured by $^{19}$F-NMR was, in weight, TFE/PEVE = 50/50. The melting point of the crystal was not detected by DSC. The glass transition temperature was 21°C. The melt flow rate (MFR) measured in compliance with ASTM D1238, at a weight of 5 kg and measured temperature of 250°C $\pm$ 0.1 was 40 g/10 min.

The obtained TFE/PEVE copolymer is considered TFE/PEVE copolymer C and the dispersion liquid is considered the dispersion liquid of TFE/PEVE copolymer C.

Comparative Preparation Example 1 - Preparation of TFE/PEVE copolymer D

A TFE/PEVE copolymer was prepared in the same way as the above-described Preparation Example 1 except for making the PEVE supply amount before starting polymerization 132 g and making the PEVE supply rate after starting the reaction 0.9 g/min. The solid content ratio of the dispersion liquid was 32 wt%. The composition of the product resin measured by $^{19}$F-NMR was, in weight, TFE/PEVE = 85/15. The melting point of the crystal was 265°C according to DSC. The glass transition temperature was 66°C. The melt flow rate (MFR) measured in compliance with ASTM D1238, at a weight of 5 kg and measured temperature of 250°C $\pm$ 0.1 was unmeasurable.

The obtained TFE/PEVE copolymer is considered TFE/PEVE copolymer D and the dispersion liquid is considered the dispersion liquid of TFE/PEVE copolymer D.

Example 1

The dispersion liquid of TFE/PEVE copolymer A obtained in the above-described Preparation Example 1 was coated on a commercially available film (vertical 150 mm $\times$ horizontal 150 mm $\times$ thickness 1 mm) consisting of polypropylene (molding temperature 199-304°C) and dry fired at 150°C, which is a temperature that is greater than or equal to the glass transition point of the copolymer to obtain a multilayered molded body.

The state of the TFE/PEVE copolymer layer was visually observed, and evaluated with the following criteria as a film-forming properties test: ○ = good coated film, $\times$ = a coated film could not be obtained. The results are shown in Table 1.

Examples 2 and 3

A multilayered molded body was obtained in the same way as Example 1 besides changing the TFE/PEVE copolymer A to the dispersion liquid of TFE/PEVE copolymer B and dispersion liquid of TFE/PEVE copolymer C obtained in the above-described Preparation Examples 2 and 3. In the same way as Example 1, the state of the TFE/PEVE copolymer layer was visually observed and the film-forming properties were evaluated. The results are shown in Table 1. The film-forming properties were tested.

Comparative Example 1

A multilayered molded body was obtained in the same way as Example 1 besides changing the TFE/PEVE copolymer A to the dispersion liquid of TFE/PEVE copolymer D obtained in the above-described Comparative Preparation Example 1. In the same way as Example 1, the state of the TFE/PEVE copolymer layer was visually observed and the film-forming properties were evaluated. The results are shown in Table 1.

Example 4

The dispersion liquid of TFE/PEVE copolymer B obtained in the above-described Preparation Example 2 was coated on a commercially available film (vertical 150 mm $\times$ horizontal 150 mm $\times$ thickness 1 mm) consisting of high-density polyethylene (molding temperature 149-316°C) and dry fired at 100°C, which is a temperature that is greater than or equal to the glass transition point of the copolymer to obtain a multilayered molded body. In the same way as Example 1, the state of the TFE/PEVE copolymer layer was visually observed and the film-forming properties were evaluated. The results are shown in Table 1.

Example 5

A multilayered molded body was obtained in the same way as Example 4 except changing the TFE/PEVE copolymer B to the dispersion liquid of TFE/PEVE copolymer C obtained in the above-described Preparation Example 3. In the same way as Example 1, the state of the TFE/PEVE copolymer layer was visually observed and the film-forming properties were evaluated. The results are shown in Table 1.

Comparative Example 2

A multilayered molded body was obtained in the same way as Example 4 except changing the TFE/PEVE copolymer B to the dispersion liquid of TFE/PEVE copolymer D obtained in the above-described Comparative Preparation Example 1. In the same way as Example 1, the state of the TFE/PEVE copolymer layer was visually observed and the film-forming properties were evaluated. The results are shown in Table 1.

Example 6

The dispersion liquid of TFE/PEVE copolymer B obtained in the above-described Preparation Example 2 was coated on a commercially available film (vertical 150 mm × horizontal 150 mm × thickness 1 mm) consisting of polyethylene terephthalate (molding temperature 270-330°C) and dry fired at 100°C, which is a temperature that is greater than or equal to the glass transition point of the copolymer to obtain a multilayered molded body. In the same way as Example 1, the state of the TFE/PEVE copolymer layer was visually observed and the film-forming properties were evaluated. The results are shown in Table 1.

Example 7

A multilayered molded body was obtained in the same way as Example 6 except changing the TFE/PEVE copolymer B to the dispersion liquid of TFE/PEVE copolymer C obtained in the above-described Preparation Example 3. In the same way as Example 1, the state of the TFE/PEVE copolymer layer was visually observed and the film-forming properties were evaluated. The results are shown in Table 1.

Comparative Example 3

A multilayered molded body was obtained in the same way as Example 6 except changing the TFE/PEVE copolymer B to the dispersion liquid of TFE/PEVE copolymer D obtained in the above-described Comparative Preparation Example 1. In the same way as Example 1, the state of the TFE/PEVE copolymer layer was visually observed and the film-forming properties were evaluated. The results are shown in Table 1.

Table 1

| | TFE/PEVE copolymer | amorphous/ crystal | glass transition point (°C) | melting point (°C) | dry firing temperature | substrate | film-forming properties |
|---|---|---|---|---|---|---|---|
| Example 1 | A | amorphous | 56 | - | 150 | polypropylene | ○ |
| Example 2 | B | amorphous | 33 | - | 150 | polypropylene | ○ |
| Example 3 | C | amorphous | 21 | - | 150 | polypropylene | ○ |
| Example 4 | B | amorphous | 33 | - | 100 | high density polyethylene | ○ |
| Example 5 | C | amorphous | 21 | - | 100 | high density polyethylene | ○ |
| Example 6 | B | amorphous | 33 | - | 100 | polyethylene terephthalate | ○ |
| Example 7 | C | amorphous | 21 | - | 100 | polyethylene terephthalate | ○ |
| Comparative Example 1 | D | crystal | - | 229 | 150 | polypropylene | × |
| Comparative Example 2 | D | crystal | - | 229 | 100 | high density polyethylene | × |
| Comparative Example 3 | D | crystal | - | 229 | 100 | polyethylene terephthalate | × |

Example 8

19.8 g of methoxy perfluorohexane and 0.2 g of the above-described TFE/PEVE copolymer C were put in a sample tube (50 mL), and by conducting ultrasonic treatment for around 180 minutes at 50°C, 1 wt% of a composition was made, based on the combined weight of the polymer and the solvent. The obtained composition was coated on a commercially available film (vertical 150 mm × horizontal 150 mm × thickness 1 mm) consisting of high-density polyethylene (molding temperature 149-316°C) and dry fired for three hours at 60°C to obtain a multilayered molded body.

The TFE/PEVE copolymer layer was visually observed and the film-forming properties of the TFE/PEVE copolymer was tested with the following criteria: ○ = a good coated film; × = unevenness was observed in the coated film. The results are shown in Table 2 The TFE/PEVE copolymer layer was a uniform coating layer, and no pinholes were observed. Meanwhile, the TFE/PEVE copolymer A and TFE/PEVE copolymer B obtained above did not display solubility to the solvent, so a multilayered molded body was not prepared.

Example 9

A multilayered molded body was prepared in the same way as Example 8 except changing the commercially available film consisting of high-density polyethylene, which is the substrate, to a commercially available film (vertical 150 mm × horizontal 150 mm × thickness 1 mm) consisting of propylene (molding temperature 199-304°C), and its film-forming properties were tested. The results are shown in Table 2.

Example 10

A multilayered molded body was prepared in the same way as Example 8 except changing the commercially available film consisting of high-density polyethylene, which is the substrate, to a commercially available film (vertical 150 mm × horizontal 150 mm × thickness 1 mm) consisting of polyethylene terephthalate (molding temperature 199-304°C) and its film-forming properties were tested.

The state of the obtained coated film was visually observed. The results are shown in Table 2.

Table 2

| | TFE/PEVE copolymer | solvent | Substrate | film-forming properties |
|---|---|---|---|---|
| Example 8 | C | methoxy perfluorohexane | high density polyethylene | ○ |
| Example 9 | C | methoxy perfluorohexane | polypropylene | ○ |
| Example 10 | C | methoxy perfluorohexane | polyethylene terephthalate | ○ |
| TFE/PEVE copolymer solution - Film-forming test for a composition containing filler | | | | |

Example 11

A composition was prepared by adding 1 mg of Rhodamine B to 100 g of dispersion liquid of TFE/PEVE copolymer solution A obtained in the above-described Preparation Example 1 and conducting ultrasonic treatment for around 180 minutes at 30°C. The obtained composition was coated on aluminum (vertical 150 mm × horizontal 150 mm × thickness 1 mm) and dried at 200°C to test its film-forming properties.

Example 12

A composition was prepared by adding 1 mg of Rhodamine B to 100 g of dispersion liquid obtained in the preparation for TFE/PEVE copolymer B and conducting ultrasonic treatment for around 180 minutes at 30°C. The obtained composition was coated on a commercially available film (vertical 150 mm × horizontal 150 mm × thickness 1 mm) consisting of polypropylene (molding temperature 199-304°C) and dried at 100°C to test its film-forming properties.

Example 13

Film-forming properties were tested in the same way as Example 12 except changing the TFE/PEVE copolymer B in Example 13 to TFE/PEVE copolymer C.

Example 14

Film-forming properties were tested in the same way as Example 11 except changing Rhodamine B to Sudan III.

Example 15

Film-forming properties were tested in the same way as Example 12 except changing Rhodamine B to Sudan III.

Example 16

Film-forming properties were tested in the same way as Example 12 except changing the TFE/PEVE copolymer B in Example 12 to the TFE/PEVE copolymer C and changing the Rhodamine B to Sudan III.

Example 17

19.8 g of Novec 7300 and 0.2 g of the above-described TFE/PEVE copolymer C were put in a sample tube (50 ml), and by conducting ultrasonic treatment for around 180 minutes at 50°C, a composition was prepared. The obtained composition was coated on a commercially available film (vertical 150 mm × horizontal 150 mm × thickness 1 mm) consisting of polypropylene (molding temperature 199-304°C) and dried for three hours at 60°C to test its film-forming properties.

Example 18

The film-forming properties were tested in the same way as Example 17 except changing Rhodamine B to Sudan III.

The state of the obtained coated film was visually observed. The results are shown in Table 3.

The film-forming properties of the coated film after drying were evaluated according to the following criteria: ○ = a good coated film, × = unevenness was observed in the coated film.

The color tone of the coated film after drying was evaluated according to the following criteria: ○ = a good color, × = discoloration observed.

Table 3

|  | TFE/PEVE copolymer | solvent | filler | substrate | film-forming properties | color tone |
|---|---|---|---|---|---|---|
| Example 11 | A aqueous dispersion | - | Rhodamine B | aluminum | ○ | ○ |
| Example 12 | B aqueous dispersion | - | Rhodamine B | polypropylene | ○ | ○ |
| Example 13 | C aqueous dispersion | - | Rhodamine B | polypropylene | ○ | ○ |
| Example 14 | A aqueous dispersion | - | Sudan III | aluminum | ○ | ○ |
| Example 15 | B aqueous dispersion | - | Sudan III | polypropylene | ○ | ○ |
| Example 16 | C aqueous dispersion | - | Sudan III | polypropylene | ○ | ○ |
| Example 17 | C | methoxy perfluorohexane | Rhodamine B | polypropylene | ○ | ○ |
| Example 18 | C | methoxy perfluorohexane | Sudan III | polypropylene | ○ | ○ |

Example 19

50 g of TFE/PEVE copolymer A obtained in Preparation Example 1 was filled into a mold that was heated to 200°C on a hot press and heated for 20 minutes, after which it was pressurized for around three minutes at a pressure of 10 kgf/cm$^2$. Thereafter, the mold was left and cooled at room temperature for 30 minutes to obtain a vertical 150 mm × horizontal 150 mm × thickness 1 mm film.

Next, a commercially available film (vertical 150 mm × horizontal 150 mm × thickness 1 mm) consisting of polypropylene (molding temperature 199-304°C) and a film consisting of the TFE/PEVE copolymer A obtained above were laminated in that order in a mold that was heated to 200°C on a hot press, and heated for 10 minutes after which it was pressurized for around 15 minutes at a pressure of 10 kgf/cm$^2$. Thereafter, the mold was left and cooled at room temperature for 30 minutes to obtain a multilayered molded body consisting of two layers of vertical 150 mm × horizontal 150 mm × thickness 2 mm film.

The obtained laminate body was tilted to a state that configures a 60° angle with horizontal and left still for 5 minutes and the adhesion between the layers was observed. The adhesion was evaluated according to the following criteria: ○ = no separation between the layers was observed, × = separation between the layers was observed. The results are shown in Table 4.

Examples 20 and 21, Comparative Example 4

A multilayered molded body was prepared in the same way as Example 19 except using TFE/PEVE copolymers B and C obtained in Preparation Examples 2 and 3, as well as TFE/PEVE copolymer D obtained in Comparative Preparation Example 1, instead of TFE/PEVE copolymer A. The adhesion between layers of the obtained laminate bodies was observed and evaluated in the same way as the examples. The results are shown in Table 4.

Table 4

| Example | TFE/PEVE copolymer | substrate | adhesion |
|---|---|---|---|
| Example 19 | A | polypropylene | ○ |
| Example 20 | B | polypropylene | ○ |
| Example 21 | C | polypropylene | ○ |
| Comparative Example 4 | D | polypropylene | × |

**Claims**

1. A composite molded body comprising a layer of a copolymer of tetrafluoroethylene and perfluoro(ethyl vinyl ether), wherein the amount of perfluoro(ethyl vinyl ether) in said copolymer is 20 to 80 weight percent based on the total weight of the copolymer, and wherein the melt flow rate of said copolymer is 0.1 to 100 g/10 min, as measured in compliance with ASTM D1238 at a temperature of 250°C ±0.1°C using a 5 kg weight, wherein
the composite molded body comprises said copolymer and a thermoplastic resin and/or a thermosetting resin.

2. The composite molded body of claim 1, wherein the melt flow rate of said copolymer of tetrafluoroethylene and perfluoro(ethyl vinyl ether) is 10 to 100 g/10 min.

3. The composite molded body of claim 1, wherein said thermoplastic resin and/or thermosetting resin is at least one selected from the group consisting of nylon; polycarbonate; polyacetal; ultra high molecular weight polyethylene; polyurethane; styrene thermoplastic elastomer; polyvinyl chloride; and polyvinylidene chloride; or at least one type of polyester selected from the group consisting of polyterephthalate, polybutylene terephthalate, polyethylene naphthalate, and polybutylene naphthalate; or at least one type of polyolefin selected from the group consisting of low density polyethylene, medium density polyethylene, high density polyethylene, low density polypropylene, medium density polypropylene, high density polypropylene; or at least one type of ethylene-unsaturated carboxylic acid ester copolymer selected from the group consisting of polystyrene, polymethyl methacrylate, ethylene vinyl acetate, and ethylene (meth)acrylic acid ester.

4. The composite molded body of claim 1, wherein said thermosetting resin is at least one resin selected from the group consisting of phenolic resins, urea resins, melamine resins, unsaturated polyester resins, epoxy resins, and silicon resin.

5. The composite molded body of claim 1, wherein said composite molded body is a multilayered molded body.

6. The composite molded body of claim 5, wherein said composite molded body is a multilayered molded body obtained by coating an aqueous dispersion of said copolymer of tetrafluoroethylene and perfluoro(ethyl vinyl ether), or a solution of said copolymer of tetrafluoroethylene and perfluoro(ethyl vinyl ether) in an organic solvent, onto the surface of a molded body of a thermoplastic resin and/or thermosetting resin, and heating the coated molded body to a temperature greater than or equal to the melting temperature of said copolymer of tetrafluoroethylene and perfluoro(ethyl vinyl ether).

7. The composite molded body of claim 5, wherein said composite molded body is a multilayered molded body obtained by co-extruding said copolymer of tetrafluoroethylene and perfluoro(ethyl vinyl ether) and a thermoplastic resin and/or thermosetting resin.

8. The composite molded body of claim 1, wherein said copolymer of tetrafluoroethylene and perfluoro(ethylene vinyl ether) includes a filler.

9. A method for manufacturing a multilayered composite molded body, comprising coating an aqueous dispersion of a copolymer of tetrafluoroethylene and perfluoro(ethyl vinyl ether), or a solution of said copolymer of tetrafluoroethylene and perfluoro(ethyl vinyl ether) in an organic solvent, onto the surface of a molded body of a thermoplastic resin and/or thermosetting resin, and heating the resultant coated molded body to a temperature greater than or equal to the melting temperature of said copolymer of tetrafluoroethylene and perfluoro(ethyl vinyl ether), wherein the amount of perfluoro(ethyl vinyl ether) in said copolymer of tetrafluoroethylene and perfluoro(ethyl vinyl ether) is 20 to 80 weight percent based on the total weight of said copolymer of tetrafluoroethylene and perfluoro(ethyl vinyl ether), and wherein the melt flow rate of said copolymer of tetrafluoroethylene and perfluoro(ethyl vinyl ether) is 10 to 100 g/10 min, as measured in compliance with ASTM D1238 at a temperature of 250°C $\pm$ 0.1 using a 5 kg weight.

10. A method for manufacturing a multilayered composite molded body, wherein a copolymer of tetrafluoroethylene and perfluoro(ethyl vinyl ether) and a thermoplastic resin and/or thermosetting resin are coextruded and wherein the amount of perfluoro(ethyl vinyl ether) in said copolymer of tetrafluoroethylene and perfluoro(ethyl vinyl ether) is 20 to 80 weight percent based on the total weight of said copolymer of tetrafluoroethylene and perfluoro(ethyl vinyl ether), and wherein the melt flow rate of said copolymer of tetrafluoroethylene and perfluoro(ethyl vinyl ether) is 10 to 100 g/10min, as measured in complicance with ASTM D1238 at a temperature of 250° C $\pm$ 0.1 using a 5 kg weight.

**Patentansprüche**

1. Komposit-Formkörper umfassend eine Schicht aus einem Copolymer von Tetrafluorethylen und Perfluor(ethylvinylether), wobei die Menge an Perfluor(ethylvinylether) in dem Copolymer 20 bis 80 Gewichtsprozent, auf das Gesamtgewicht des Copolymers bezogen, beträgt und wobei die Schmelzfließrate des Copolymers 0,1 bis 100 g/10 min, wie ASTM D1238 entsprechend bei einer Temperatur von 250°C $\pm$ 0,1°C unter Anwendung eines Gewichts von 5 kg gemessen, beträgt, wobei
der Komposit-Formkörper das Copolymer und ein thermoplastisches Harz und/oder ein Duroplastharz umfasst.

2. Komposit-Formkörper nach Anspruch 1, wobei die Schmelzfließrate des Copolymers von Tetrafluorethylen und Perfluor(ethylvinylether) 10 bis 100 g/10 min beträgt.

3. Komposit-Formkörper nach Anspruch 1, wobei das thermoplastische Harz und/oder das Duroplastharz mindestens eines sind ausgewählt aus der Gruppe bestehend aus Nylon, Polycarbonat, Polyacetal, ultrahochmolekularem Polyethylen, Polyurethan, thermoplastischem Styrolelastomer, Polyvinylchlorid und Polyvinylidenchlorid oder mindestens einem Typ Polyester ausgewählt aus der Gruppe bestehend aus Polyterephthalat, Polybutylenterephthalat, Polyethylennaphthalat, und Polybutylennaphthalat oder mindestens einem Typ Polyolefin ausgewählt aus der Gruppe bestehend aus Polyethylen niedriger Dichte, Polyethylen mittlerer Dichte, Polyethylen hoher Dichte, Polypropylen niedriger Dichte, Polypropylen mittlerer Dichte, Polypropylen hoher Dichte oder mindestens einem Typ ethylenungesättigtem Carbonsäureestercopolymer ausgewählt aus der Gruppe bestehend aus Polystyrol, Polymethylmethacrylat, Ethylenvinylacetat und Ethylen(meth)acrylsäureester.

4. Komposit-Formkörper nach Anspruch 1, wobei das Duroplastharz mindestens ein Harz ist ausgewählt aus der Gruppe bestehend aus phenolischen Harzen, Harnstoffharzen, Melaminharzen, ungesättigten Polyesterharzen, Epoxidharzen und Siliciumharz.

5. Komposit-Formkörper nach Anspruch 1, wobei der Komposit-Formkörper ein mehrschichtiger Formkörper ist.

6. Komposit-Formkörper nach Anspruch 5, wobei der Komposit-Formkörper ein mehrschichtiger Formkörper ist, der durch schichtförmiges Auftragen einer wässrigen Dispersion des Copolymers von Tetrafluorethylen und Perfluor(ethylvinylether) oder einer Lösung des Copolymers von Tetrafluorethylen und Perfluor(ethylvinylether) in einem organischen Lösungsmittel auf die Oberfläche eines Formkörpers aus einem thermoplastischen Harz und/oder Duroplastharz und Erhitzen des beschichteten Formkörpers auf eine Temperatur über oder gleich der Schmelztemperatur des Copolymers von Tetrafluorethylen und Perfluor(ethylvinylether) erhalten wird.

7. Komposit-Formkörper nach Anspruch 5, wobei der Komposit-Formkörper ein mehrschichtiger Formkörper ist, der durch Coextrudieren des Copolymers von Tetrafluorethylen und Perfluor(ethylvinylether) und eines thermoplastischen Harzes und/oder Duroplastharzes erhalten wird.

8. Komposit-Formkörper nach Anspruch 1, wobei das Copolymer von Tetrafluorethylen und Perfluor(ethylenvinylether) einen Füllstoff umfasst.

9. Verfahren für die Herstellung eines mehrschichtigen Komposit-Formkörpers, umfassend schichtförmiges Auftragen einer wässrigen Dispersion eines Copolymers von Tetrafluorethylen und Perfluor(ethylvinylether) oder einer Lösung des Copolymers von Tetrafluorethylen und Perfluor(ethylvinylether) in einem organischen Lösungsmittel auf die Oberfläche eines Formkörpers eines thermoplastischen Harzes und/oder Duroplastharzes und Erhitzen des resultierenden beschichteten Formkörpers auf eine Temperatur über oder gleich der Schmelztemperatur des Copolymers von Tetrafluorethylen und Perfluor(ethylvinylether) erhalten wird, wobei die Menge an Perfluor(ethylvinylether) in dem Copolymer von Tetrafluorethylen und Perfluor(ethylvinylether) 20 bis 80 Gewichtsprozent, auf das Gesamtgewicht des Copolymers von Tetrafluorethylen und Perfluor(ethylvinylether) bezogen, beträgt und wobei die Schmelzfließrate des Copolymers von Tetrafluorethylen und Perfluor(ethylvinylether) 10 bis 100 g/10 min, wie ASTM D1238 entsprechend bei einer Temperatur von 250°C $\pm$ 0,1°C unter Anwendung eines Gewichts von 5 kg gemessen, beträgt.

10. Verfahren für die Herstellung eines mehrschichtigen Komposit-Formkörpers, wobei ein Copolymer von Tetrafluorethylen und Perfluor(ethylvinylether) und ein thermoplastisches Harz und/oder Duroplastharz coextrudiert werden und wobei die Menge an Perfluor(ethylvinylether) in dem Copolymer von Tetrafluorethylen und Perfluor(ethylvinylether) 20 bis 80 Gewichtsprozent, auf das Gesamtgewicht des Copolymers von Tetrafluorethylen und Perfluor(ethylvinylether) bezogen, beträgt und wobei die Schmelzfließrate des Copolymers von Tetrafluorethylen und Perfluor(ethylvinylether) 10 bis 100 g/10 min, wie ASTM D1238 entsprechend bei einer Temperatur von 250°C $\pm$ 0,1°C unter Anwendung eines Gewichts von 5 kg gemessen, beträgt.

## Revendications

1. Corps moulé composite comprenant une couche d'un copolymère de tétrafluoroéthylène et de perfluoro(éther d'éthyl vinyle), la quantité de perfluoro(éther d'éthyl vinyle) dans ledit copolymère étant de 20 à 80 pour cent en poids sur la base du poids total du copolymère, et le débit d'écoulement à l'état fondu dudit copolymère étant de 0,1 à 100 g/10 min, tel que mesuré selon la norme ASTM D1238 à une température de 250°C $\pm$ 0,1°C en utilisant un poids de 5 kg, où
le corps moulé composite comprend ledit copolymère et une résine thermoplastique et/ou une résine thermodurcissable.

2. Corps moulé composite selon la revendication 1, dans lequel le débit d'écoulement à l'état fondu dudit copolymère de tétrafluoroéthylène et de perfluoro(éther d'éthyl vinyle) étant de 10 à 100 g/10 min.

3. Corps moulé composite selon la revendication 1, dans lequel ladite résine thermoplastique et/ou résine thermodurcissable est au moins l'un sélectionné dans le groupe constitué du nylon; du polycarbonate; du polyacétal; du polyéthylène d'ultra haut poids moléculaire; du polyuréthane; de l'élastomère thermoplastique de styrène; du poly(chlorure de vinyle); et du poly(chlorure de vinylidène); ou d'au moins un type de polyester sélectionné dans le groupe constitué du polytéréphtalate, du poly(téréphtalate de butylène), du poly(naphtalate d'éthylène), et du poly(naphtalate de butylène); ou d'au moins un type de polyoléfine sélectionnée dans le groupe constitué du polyéthylène basse densité, du polyéthylène de densité moyenne, du polyéthylène haute densité, du polypropylène basse densité, du polypropylène de densité moyenne, du polypropylène haute densité; ou d'au moins un type du copolymère d'éthylène-ester d'acide carboxylique insaturé sélectionné dans le groupe constitué du polystyrène, du poly(méthacrylate de méthyle), de l'éthylène-acétate de vinyle, et de l'éthylène-ester d'acide (méth)acrylique.

4. Corps moulé composite selon la revendication 1, dans lequel ladite résine thermodurcissable est au moins une résine sélectionnée dans le groupe constitué des résines phénoliques, des résines d'urée, des résines mélamines, des résines de polyester insaturées, des résines époxy, et de la résine de silicone.

5. Corps moulé composite selon la revendication 1, dans lequel ledit corps moulé composite est un corps moulé multicouche.

6. Corps moulé composite selon la revendication 5, dans lequel ledit corps moulé composite est un corps moulé multicouche obtenu par revêtement d'une dispersion aqueuse dudit copolymère de tétrafluoroéthylène et de perfluoro(éther d'éthyl vinyle), ou d'une solution dudit copolymère de tétrafluoroéthylène et de perfluoro(éther d'éthyl vinyle) dans un solvant organique, sur la surface d'un corps moulé d'une résine thermoplastique et/ou d'une résine thermodurcissable, et le chauffage du corps moulé revêtu à une température supérieure ou égale à la température de fusion dudit copolymère de tétrafluoroéthylène et de perfluoro(éther d'éthyl vinyle).

7. Corps moulé composite selon la revendication 5, dans lequel ledit corps moulé composite est un corps moulé multicouche obtenu par co-extrusion dudit copolymère de tétrafluoroéthylène et de perfluoro(éther d'éthyl vinyle) et d'une résine thermoplastique et/ou d'une résine thermodurcissable.

8. Corps moulé composite selon la revendication 1, dans lequel ledit copolymère de tétrafluoroéthylène et de perfluoro(éther d'éthylène vinyle) comprend une charge.

9. Procédé de fabrication d'un corps moulé composite multicouche, comprenant le revêtement d'une dispersion aqueuse d'un copolymère de tétrafluoroéthylène et de perfluoro(éther d'éthyl vinyle), ou d'une solution dudit copolymère de tétrafluoroéthylène et de perfluoro(éther d'éthyl vinyle) dans un solvant organique, sur la surface d'un corps moulé d'une résine thermoplastique et/ou d'une résine thermodurcissable, et le chauffage du corps moulé revêtu résultant à une température supérieure ou égale à la température de fusion dudit copolymère de tétrafluoroéthylène et de perfluoro(éther d'éthyl vinyle), la quantité du perfluoro(éther d'éthyl vinyle) dans ledit copolymère de tétrafluoroéthylène et de perfluoro(éther d'éthyl vinyle) étant de 20 à 80 pour cent en poids sur la base du poids total dudit copolymère de tétrafluoroéthylène et de perfluoro(éther d'éthyl vinyle), et le débit d'écoulement à l'état fondu dudit copolymère de tétrafluoroéthylène et de perfluoro(éther d'éthyl vinyle) étant de 10 à 100 g/10 min, tel que mesuré selon la norme ASTM D1238 à une température de 250°C ± 0,1 en utilisant un poids de 5 kg.

10. Procédé de fabrication d'un corps moulé composite multicouche, dans lequel un copolymère de tétrafluoroéthylène et de perfluoro(éther d'éthyl vinyle) et d'une résine thermoplastique et/ou d'une résine thermodurcissable sont coextrudés et où la quantité du perfluoro(éther d'éthyl vinyle) dans ledit copolymère de tétrafluoroéthylène et de perfluoro(éther d'éthyl vinyle) est de 20 à 80 pour cent en poids sur la base du poids total dudit copolymère de tétrafluoroéthylène et de perfluoro(éther d'éthyl vinyle), et où le débit d'écoulement à l'état fondu dudit copolymère de tétrafluoroéthylène et de perfluoro(éther d'éthyl vinyle) est de 10 à 100 g/10 min, tel que mesuré selon la norme ASTM D1238 à une température de 250°C ± 0,1 en utilisant un poids de 5 kg.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07161260 B
- JP 3980649 B
- US 5266639 A
- US 5328946 A
- US 5397829 A

**Non-patent literature cited in the description**

- *CHEMICAL ABSTRACTS,* 81-99-9
- *CHEMICAL ABSTRACTS,* 85-86-9